Europäisches Patentamt

European Patent Office

Office européen des brevets

(19)

(11) **EP 1 279 215 B1**

(12) **FASCICULE DE BREVET EUROPEEN**

(45) Date de publication et mention
de la délivrance du brevet:
**17.03.2004 Bulletin 2004/12**

(21) Numéro de dépôt: **00945983.5**

(22) Date de dépôt: **22.06.2000**

(51) Int Cl.⁷: **H02K 9/19**, H02K 9/26,
C02F 1/42

(86) Numéro de dépôt international:
**PCT/FR2000/001735**

(87) Numéro de publication internationale:
**WO 2001/082450 (01.11.2001 Gazette 2001/44)**

(54) **PROCEDE DE TRAITEMENT ET DE CONDITIONNEMENT DE L'EAU DE REFROIDISSEMENT DE STATOR D'ALTERNATEUR FONCTIONNANT EN MODE AERE, ET DISPOSITIF PERMETTANT SA MISE EN OEUVRE**

VERFAHREN ZUR BEHANDLUNG UND KONDITIONIERUNG DES KÜHLWASSERS EINES BELÜFTETEN KÜHLKREISLAUFS IN DEM STATOR EINES DREHSTROMGENERATORS UND VORRICHTUNG ZUR DURCHFÜHRUNG DIESES VERFAHRENS

METHOD FOR TREATING AND CONDITIONING COOLING WATER FOR AN ALTERNATOR STATOR OPERATING IN VENTILATED MODE, AND DEVICE THEREFOR

(84) Etats contractants désignés:
**AT BE CH CY DE DK ES FI FR GB GR IE IT LI LU MC NL PT SE**

(30) Priorité: **20.04.2000 FR 0005097**

(43) Date de publication de la demande:
**29.01.2003 Bulletin 2003/05**

(73) Titulaire: **Electricité de France Service National 75008 Paris (FR)**

(72) Inventeurs:
• **GABRIEL, Jean-Christophe**
**F-92260 Fontenay aux Roses (FR)**
• **VERMEEREN, Didier**
**F-60150 Villiers sur Coudun (FR)**

(74) Mandataire: **Touati, Catherine**
**Cabinet Plasseraud**
**65/67 rue de la Victoire**
**75440 Paris Cedex 09 (FR)**

(56) Documents cités:
**WO-A-99/43070**          **US-A- 4 434 058**

**Description**

La présente invention concerne un procédé permettant de s'affranchir des phénomènes d'obstruction de circuit de refroidissement de stator d'alternateur fonctionnant en mode aéré. Elle concerne également un dispositif permettant la mise en oeuvre de ce procédé.

Dans les centrales électriques, les alternateurs sont soumis au passage de fortes densités de courant qui provoquent un échauffement important. Pour lutter contre cet échauffement, les stators des alternateurs sont constitués par des réseaux de barres statoriques qui possèdent des conducteurs creux en cuivre dans lesquels circule de l'eau de refroidissement.

Afin d'avoir une conductivité la plus faible possible de l'eau de refroidissement, environ 1 à 7% du débit nominal de l'eau circulant dans le stator est dérivé vers une résine de déminéralisation à lit mélangé.

Un problème fréquemment rencontré avec ces systèmes de refroidissement, est la formation de dépôts sur les parois internes des conducteurs creux, dépôts qui obstruent ces conducteurs. De telles obstructions conduisent à un échauffement et à terme à de nombreuses indisponibilités de l'alternateur ou à des baisses de charge.

Une tentative de solution a consisté à conditionner les circuits de refroidissement sous air. Cependant, ceci ne s'est pas avéré satisfaisant à long terme, le phénomène d'obstruction persistant.

Pour lutter contre ces obstructions, les alternateurs sont donc arrêtés périodiquement pour procéder à un nettoyage chimique des conducteurs creux en cuivre à l'aide de solutions acides et/ou complexantes. Cependant, ces opérations de nettoyage sont longues, conduisent à l'arrêt des machines et sont souvent corrosives pour les conducteurs creux.

En réponse à ces difficultés, une autre tentative de solution décrite dans le document WO-A- 9 943 070 a été d'établir un procédé d'épuration en dérivant une partie de l'eau en amont de l'alternateur vers un circuit de désionisation qui alimente le réservoir d'expansion et de traiter cette eau grâce à une résine à lit mélangé et/ou une résine cationique.

Un tel procédé permet de jouer sur les concentrations d'ions en solution et d'influencer le pH, ce qui permet de dissoudre les bouchons tout en gardant l'alternateur en marche.

Toutefois, un tel procédé ne permet pas de s'affranchir définitivement du phénomène d'obstruction persistant, une fois les conducteurs épurés.

Ainsi, il existe un réel besoin en un procédé permettant de s'affranchir définitivement de la formation des dépôts responsables de l'obstruction des conducteurs creux en cuivre ou en alliages de cuivre, de stators d'alternateur dans un circuit de refroidissement fonctionnant en mode aéré.

Les inventeurs, au prix de nombreux efforts, ont eu le mérite de mettre au point un tel procédé.

Ce procédé permet d'empêcher définitivement la formation de ces dépôts à l'intérieur des conducteurs creux en cuivre ou en alliages de cuivre, sans l'arrêt de l'alternateur, sans générer de conductivité élevée et en induisant une corrosion infime des conducteurs creux en cuivre ou en alliages de cuivre du circuit de refroidissement. Avantageusement, ce procédé sera utilisé en complément du procédé décrit dans le document WO-A- 9 943 070.

L'invention porte donc sur un procédé de traitement et de conditionnement de l'eau de circuit de refroidissement de stator d'alternateur, fonctionnant en mode aéré, suivant lequel l'eau du circuit fermé de refroidissement du stator de l'alternateur est entraînée par une pompe à partir d'un réservoir d'expansion, refroidie et éventuellement filtrée afin d'alimenter les conducteurs creux en cuivre ou en alliages de cuivre du stator d'alternateur, une partie de l'eau est dérivée en amont de l'alternateur vers un circuit de désionisation alimentant le réservoir d'expansion, ledit circuit de désionisation comprenant au moins une résine susceptible de retenir les ions $Cu^{2+}$ et au moins une résine susceptible de retenir tout ou partie des anions présents dans l'eau de refroidissement, le circuit de désionisation comprenant un circuit de déminéralisation et un circuit de traitement avec des moyens permettant l'ouverture sélective ou simultanée desdits circuits et la régulation des débits sur lesdits circuits, ledit procédé étant caractérisé par le fait que la pression partielle en $CO_2$ dans la phase gazeuse dudit réservoir d'expansion est maintenue à une valeur telle que :

$$\log (pCO_2) > 1{,}8 \times \log (S_{\text{éch}}/Q_{\text{res}}) + 0{,}034 \times T - 8{,}1 \qquad (A)$$

où : $pCO_2$ représente la pression partielle du $CO_2$ dans la phase gazeuse dudit réservoir d'expansion,

$S_{\text{éch}}$ est la surface d'échange entre les éléments en cuivre ou en alliages de cuivre constitutifs du circuit et l'eau de refroidissement,

$Q_{\text{res}}$ est le débit d'eau traversant la résine assurant la rétention des ions $Cu^{2+}$,

T est la température de l'eau de refroidissement à la sortie du stator,

$pCO_2$ étant exprimée en atm, $(S_{\text{éch}}/Q_{\text{res}})$ en $h.m^{-1}$ et

T est exprimé en °Celsius.

La ténorite (CuO), est l'espèce principalement responsable de ce phénomène. Elle se forme dans le circuit de refroidissement par précipitation de l'oxyde cuivrique. Ce processus est régi par la température, la pression partielle en $CO_2$ dans la phase gazeuse de la bâche et le rapport $S_{éch}/Q_{res}$. Le procédé et son dispositif permettent de s'affranchir définitivement du phénomène de bouchage.

En effet, en abaissant la température de l'eau de refroidissement en sortie de machine et en respectant les valeurs de $pCO_2$ et de $S_{éch}/Q_{res}$ définies par l'équation (A), il est possible de maintenir le cuivre en solution et d'éviter ainsi la formation de l'oxyde cuivrique.

Pour une installation donnée, il est possible de diminuer la température de l'eau de refroidissement à la sortie de la machine par exemple en abaissant la température à l'entrée de la machine ; il est également possible de réduire le terme $S_{éch}/Q_{res}$ par exemple en supprimant tous les éléments hors stator qui contiennent du cuivre ou ses alliages et/ou en filtrant l'eau de refroidissement dans la zone la plus chaude et/ou en augmentant le débit de traitement sur résine en augmentant le volume de résine ; l'optimisation de la pression partielle en $CO_2$ pourra être réalisée par exemple à partir du débit d'air si de l'air alimente la bâche ou à partir du débit de $CO_2$ dans l'air qui alimente la bâche si un mélange air + $CO_2$ est utilisé et/ou de la pression partielle en $CO_2$ dans l'air ou dans le mélange air + $CO_2$ qui alimente la bâche.

Pour éviter la précipitation de composés carbonatés, la pression partielle en $CO_2$ ne doit pas dépasser $10^{-1.5}$ atm. Pratiquement, la pression de l'air dans la bâche étant fixée généralement à 1 atm, la pression partielle du $CO_2$ est maintenue entre $10^{-1,5}$ atm et $10^{-5}$ atm, de préférence à environ $10^{-3,48}$ atm.

Dans ces conditions, pour éviter la précipitation du CuO, le rapport $S_{éch}/Q_{res}$ est inférieur à 100 h.m$^{-1}$, de préférence inférieur à 80 h.m$^{-1}$ et plus préférentiellement encore est inférieur à 50 h.m$^{-1}$ et T est compris entre 20°C et 70°C.

Le procédé selon l'invention peut être utilisé pour tous les types d'alternateurs refroidis par une circulation d'eau aérée dans des conducteurs creux en cuivre, des barres statoriques formant le stator. A titre d'exemple de tels alternateurs, on peut citer tous les alternateurs de centrales thermiques à flammes ou de centrales nucléaires ayant une puissance d'au moins de 250 MW.

Selon un mode de réalisation avantageux de l'invention, le circuit de désionisation comprend un circuit de déminéralisation à lit mélangé et un circuit de traitement à lit mélangé, placé en dérivation du circuit de déminéralisation avec des moyens permettant l'ouverture sélective ou simultanée desdits circuits.

Ce mode de réalisation donne la possibilité d'utiliser le circuit de traitement comme circuit de secours en cas de défaillance du circuit de déminéralisation. On pourra donc dans ce cas, fermer la circulation d'eau dans le circuit de déminéralisation en maintenant la circulation dans le circuit de traitement, réparer le circuit de déminéralisation ou changer le lit mélangé, puis rouvrir la circulation d'eau dans le circuit de déminéralisation.

Dans ce mode de réalisation, on utilise comme résine susceptible de retenir tout ou partie des anions et les ions $Cu^{2+}$, au moins un lit mélangé à résines à anions forts saturée en $OH^-$ et cations forts saturée en $H^+$.

Dans ce mode de réalisation, la résine utilisée retient le cuivre dissous et les ions $HCO_3^-$ ce qui va induire une baisse de la concentration de cette espèce en solution. La pression partielle en $CO_2$ va s'en trouver modifiée et un rééquilibrage devra être fait pour maintenir la pression en $CO_2$ à une valeur telle qu'elle respecte l'équation (A). Ce rééquilibrage pourra être réalisé par exemple, en ajustant le débit d'air à l'entrée du réservoir d'expansion si la bâche est alimentée en air ou en ajustant le débit de $CO_2$ par rapport au débit d'air si la bâche est alimentée à la fois par de l'air et du $CO_2$.

Selon un autre mode de réalisation avantageux du procédé on met en oeuvre, comme résine susceptible de retenir tout ou partie des anions et les ions $Cu^{2+}$, au moins un lit mélangé à résines à cations forts saturées en $H^+$ et à anions faibles susceptibles de ne pas retenir $HCO_3^-$

Ce type de résine ne retient pas ou très peu $HCO_3^-$. Dans ces conditions, la pression partielle en $CO_2$ est naturellement celle que l'on trouve dans l'air ou dans le mélange air + $CO_2$ qui alimente le ciel de bâche, et cela quel que soit le débit d'alimentation.

Selon un autre mode de réalisation de l'invention, le circuit de désionisation comprend un circuit de déminéralisation à résine à lit mélangé ou à résine anionique et un circuit de traitement comprenant une résine cationique, placé en dérivation du circuit de déminéralisation avec des moyens permettant l'ouverture sélective ou simultanée desdits circuits.

Ce mode de réalisation donne la possibilité de travailler avec une résine cationique, de préférence à cations forts, en alternance ou en simultané avec un lit mélangé, de préférence à anions et cations forts, ou en alternance ou en simultané avec une résine anionique à anions forts. Dans ce cas, le circuit de traitement fonctionne en permanence et le circuit de déminéralisation est mis en service de temps en temps ou en permanence. Pour ce mode de réalisation, la pression partielle en $CO_2$ dans la phase gazeuse de la bâche d'expansion peut être ajustée, par exemple :

- par la pression partielle en $CO_2$ de l'air ou du mélange air + $CO_2$ alimentant cette bâche lorsque le circuit de traitement fonctionne seul,

- par le débit et la composition de l'air alimentant la bâche,
- par le débit de $CO_2$ dans l'air qui alimente la bâche si un mélange air + $CO_2$ est utilisé.
- ou par le débit d'eau traité sur la résine anionique ou la résine à lit mélangé lorsque le circuit de déminéralisation et de traitement fonctionnent simultanément.

Des exemples de colonnes à lit mélangé à anions forts, cations forts sont notamment IRN 160 de la Société RHOM & HAAS, NRW 354 de la Société PUROLITE

Comme résine cationique, on pourra utiliser par exemple les résines de type NRW 160 de la société PUROLITE, ARC 9652 de la Société RHOM et HAAS.

Lorsqu'une résine à lit mélangé à anions faibles, cations forts est requise, on pourra utiliser par exemple le mélange IRN 97H/HP661 de la Société RHOM & HAAS.

Comme résine anionique forte, on pourra utiliser par exemple la résine IRN 78 de la Société RHOM & HAAS, NRW 600 de la Société PUROLITE.

La présente invention porte également sur un dispositif permettant la mise en oeuvre du procédé décrit ci-dessus. Ce dispositif consiste en un dispositif permettant le traitement et le conditionnement de l'eau de refroidissement de stator d'alternateur fonctionnant en mode aéré dans lequel l'eau de circuit fermé de refroidissement du stator de l'alternateur est entraînée par une pompe à partir d'un réservoir d'expansion, refroidie et éventuellement filtrée afin d'alimenter les conducteurs creux en cuivre ou en alliages de cuivre du stator d'alternateur ; une partie de l'eau est dérivée en amont de l'alternateur vers un circuit de désionisation alimentant le réservoir d'expansion, ledit circuit de désionisation comprenant au moins une résine susceptible de retenir les ions $Cu^{2+}$ et au moins une résine susceptible de retenir tout ou partie des anions présents dans l'eau de refroidissement, le circuit de désionisation comprenant un circuit de déminéralisation et un circuit de traitement avec des moyens permettant l'ouverture sélective ou simultanée desdits circuits et la régulation des débits sur lesdits circuits, ledit procédé étant caractérisé par le fait qu'il comprend un moyen de réguler la pression partielle en $CO_2$ dans la phase gazeuse dudit réservoir d'expansion à une valeur telle que :

$$\log(pCO_2) > 1,8 \times \log(S_{\text{éch}}/Q_{\text{res}}) + 0,034 \times T - 8,1 \tag{A}$$

où : $pCO_2$ est la pression partielle du $CO_2$ dans la phase gazeuse dudit réservoir d'expansion,
$S_{\text{éch}}$ est la surface d'échange entre les éléments en cuivre
ou alliages de cuivre constitutifs du circuit et l'eau de refroidissement,
$Q_{\text{res}}$ est le débit d'eau traversant la résine assurant la rétention des ions $Cu^{2+}$,
et $T$ est la température de l'eau de refroidissement à la sortie du stator ;
$pCO_2$ étant exprimée en atm, $(S_{\text{éch}}/Q_{\text{res}})$ en $h.m^{-1}$ et $T$ en ° Celsius.

Selon un mode de réalisation avantageux du dispositif, le circuit de désionisation comprend un circuit de déminéralisation à lit mélangé et un circuit de traitement à lit mélangé, placé en dérivation du circuit de déminéralisation avec des moyens permettant l'ouverture simultanée ou sélective du circuit de déminéralisation et du circuit de traitement. Ce dispositif a l'avantage de permettre le remplacement des résines sans provoquer l'arrêt du circuit et donc sans induire l'arrêt de l'alternateur.

Selon ce mode de réalisation, on utilise comme résine susceptible de retenir tout ou partie des anions et les ions $Cu^{2+}$, au moins un lit mélangé à résines à anions forts saturées en $OH^-$ et cations forts saturées en $H^+$.

La résine utilisée retient le cuivre dissous et les ions $HCO_3^-$ ce qui va induire une baisse de la concentration de cette espèce en solution. La pression partielle en $CO_2$ va s'en trouver modifiée et un rééquilibrage devra être fait pour maintenir la pression en $CO_2$ à une valeur telle qu'elle respecte l'équation (A). Ce rééquilibrage pourra être réalisé par exemple, en ajustant le débit et la teneur en $CO_2$ de l'air à l'entrée de la bâche d'expansion.

Selon un autre mode de réalisation du dispositif permettant de mettre en oeuvre le procédé, on utilise comme résine susceptible de retenir tout ou partie des anions et les ions $Cu^{2+}$, au moins un lit mélangé à résines cations forts saturées en $H^+$ et anions faibles susceptibles de ne pas retenir $HCO_3^-$.

Ce type résine ne retient pas ou très peu $HCO_3^-$, ce qui permet de conserver la valeur de la concentration de cette espèce en solution. La pression partielle en $CO_2$ dans la phase gazeuse du réservoir d'expansion est naturellement celle que l'on trouve dans l'air ou dans le mélange air + $CO_2$ qui alimente ledit réservoir et cela quel que soit le débit d'alimentation.

Selon un autre. mode de réalisation du dispositif permettant la mise en oeuvre du procédé, le circuit de désionisation comprend un circuit de déminéralisation à résine à lit mélangé ou à résine anionique et un circuit de traitement comprenant une résine cationique, placé en dérivation du circuit de déminéralisation avec des moyens permettant l'ouverture sélective ou simultanée desdits circuits.

Ce mode de réalisation donne la possibilité de travailler avec une résine cationique, de préférence à cations forts, et avec un lit mélangé, de préférence à anions et cations forts, ou une résine anionique à anions forts. Dans ce cas, le circuit de traitement fonctionne en permanence et le circuit de déminéralisation est mis en service de temps en temps ou en permanence.

Quelques exemples de moyens permettant de moduler la pression partielle en $CO_2$ dans la phase gazeuse du réservoir d'expansion sont :

- l'optimisation de la composition et du débit de l'air alimentant la bâche lorsqu'on travaille avec un ou plusieurs lits mélangés,
- la régulation du débit sur les résines anioniques ou à lit mélangé lorsqu'on utilise sur le circuit de traitement une résine cationique.

La présente invention va maintenant être décrite de façon plus détaillée à l'aide du dessin donné à titre illustratif.

Sur le dessin :

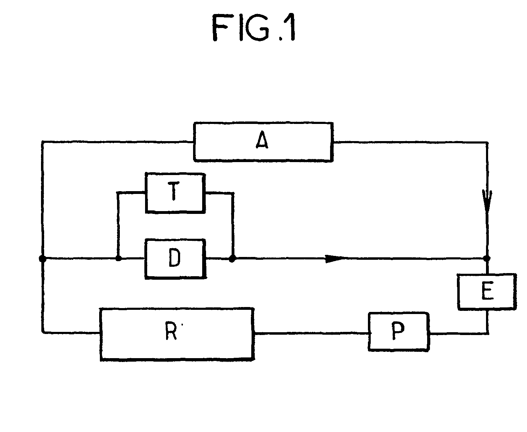

La figure 1 représente de façon schématique un exemple de circuit de refroidissement de stator d'alternateur fonctionnant en mode aéré, comprenant un circuit de désionisation constitué d'un circuit de déminéralisation (D) et un circuit de traitement (T) placé en dérivation dudit circuit de déminéralisation.

Dans ce dispositif, l'eau est entraînée par la pompe (P) et refroidie par le réfrigérant(R) avant de traverser les conducteurs en cuivre ou en alliages de cuivre du stator de l'alternateur (A).

Puis après passage par le réservoir d'expansion (E), pénètre à nouveau dans la pompe.

En amont de l'alternateur, une partie de l'eau en circulation est dérivée vers le circuit de désionisation où elle traverse les circuits de déminéralisation (D) et/ou de traitement (T).

## Revendications

1. Procédé de traitement et de conditionnement de l'eau de refroidissement de stator d'alternateur fonctionnant en mode aéré suivant lequel l'eau du circuit fermé de refroidissement du stator de l'alternateur est entraînée par une pompe à partir d'un réservoir d'expansion, refroidie et éventuellement filtrée afin d'alimenter les conducteurs creux en cuivre ou en alliages de cuivre du stator d'alternateur, une partie de l'eau est dérivée en amont de l'alternateur vers un circuit de désionisation alimentant le réservoir d'expansion, ledit circuit de désionisation comprenant au moins une résine susceptible de retenir les ions $Cu^{2+}$, et au moins une résine susceptible de retenir tout ou partie des anions présents dans l'eau de refroidissement, le circuit de désionisation comprenant un circuit de déminéralisation et un circuit de traitement avec des moyens permettant l'ouverture sélective ou simultanée desdits circuits et la régulation des débits sur lesdits circuits, ledit procédé étant **caractérisé par le fait que** la pression partielle en $CO_2$ dans la phase gazeuse dudit réservoir d'expansion est maintenue à une valeur telle que :

$$\log (pCO_2) > 1,8 \times \log(S_{\text{éch}}/Q_{\text{res}}) + 0,034 \times T - 8,1$$

où $pCO_2$ représente la pression partielle du $CO_2$ dans phase gazeuse dudit réservoir d'expansion,
$S_{\text{éch}}$ est la surface d'échange entre les éléments en cuivre ou en alliages de cuivre constitutifs du circuit et l'eau de refroidissement,
$Q_{\text{res}}$ est le débit d'eau traversant la résine assurant la rétention des ions $Cu^{2+}$,
et T est la température de l'eau de refroidissement à la sortie du stator;
$pCO_2$ étant exprimée en atm, $(S_{\text{éch}}/Q_{\text{res}})$ en $h.m^{-1}$ et T en °Celsius.

2. Procédé selon la revendication 1, **caractérisé par le fait que** le circuit de désionisation comprend un circuit de déminéralisation à lit mélangé et éventuellement un circuit de traitement à lit mélangé, placé en dérivation du circuit de déminéralisation avec des moyens permettant l'ouverture sélective ou simultanée desdits circuits.

3. Procédé selon l'une quelconque des revendications 1 ou 2, **caractérisé par le fait que**, comme résine susceptible de retenir tout ou partie des anions et les ions $Cu^{2+}$, on utilise une résine à lit mélangé à anions forts saturée en $OH^-$ et à cations forts saturée en $H^+$ et que l'on régule la composition de l'air dans la phase gazeuse du réservoir d'expansion.

4. Procédé selon l'une quelconque des revendications 1 à 2, **caractérisé par le fait que** l'on utilise comme résine susceptible de retenir tout ou partie des anions et les ions $Cu^{2+}$, un lit mélangé à résines à cations forts saturées en $H^+$ et à anions faibles susceptibles de ne pas retenir $HCO_3^-$.

5. Procédé selon la revendication 1, **caractérisé par le fait que** le circuit de désionisation comprend un circuit de déminéralisation à résine à lit mélangé à anions forts et à cations forts et un circuit de traitement à résine à cations forts, placé en dérivation du circuit de déminéralisation avec des moyens permettant l'ouverture sélective ou simultanée desdits circuits.

6. Procédé selon la revendication 1, **caractérisé par le fait que** le circuit de désionisation comprend un circuit de déminéralisation à résine à anions forts et un circuit de traitement à résine à cations forts, placé en dérivation du circuit de déminéralisation avec des moyens permettant l'ouverture sélective ou simultanée desdits circuits.

7. Procédé selon l'une quelconque des revendications 1 à 6, **caractérisé par le fait que** le rapport $S_{éch}/Q_{res}$ est inférieur à 100 $h.m^{-1}$, de préférence est inférieur à 80 $h.m^{-1}$ et plus préférentiellement encore est 50 $h.m^{-1}$.

8. Procédé selon l'une quelconque des revendications 1 à 7, **caractérisé par le fait que** la pression partielle en $CO_2$ dans la phase gazeuse du réservoir d'expansion est maintenue entre $10^{-5}$ atm et $10^{-1,5}$ atm, de préférence à environ $10^{-3,48}$ atm.

9. Procédé selon l'une quelconque des revendications 1 à 8, **caractérisé par le fait que** la température T est maintenue entre 20 et 70°C.

10. Procédé selon l'une quelconque des revendications 1 à 9 **caractérisé par le fait que** la pression partielle en $CO_2$ dans la phase gazeuse du réservoir d'expansion est maintenue par un moyen permettant la régulation du débit et/ou de la composition de l'air à l'entrée du réservoir d'expansion.

11. Procédé selon l'une quelconque des revendications 1 à 9 **caractérisé par le fait que** la pression partielle en $CO_2$ dans la phase gazeuse du réservoir d'expansion est maintenue par un moyen permettant la régulation de la teneur en $CO_2$ dans l'air qui alimente le réservoir d'expansion.

12. Procédé selon l'une quelconque des revendications 1 à 9 **caractérisé par le fait que** la pression partielle en $CO_2$ dans la phase gazeuse de la bâche d'expansion peut être ajustée par le débit et la composition de l'air à l'entrée de la bâche d'expansion et/ou le débit d'eau traité sur la résine anionique ou la résine à lit mélangé lorsque celle-ci fonctionne simultanément avec une résine cationique placée en dérivation.

13. Dispositif pour la mise en oeuvre du procédé de l'une quelconque des revendications 1 à 12 dans lequel l'eau du circuit fermé de refroidissement du stator de l'alternateur est entraînée par une pompe à partir d'un réservoir d'expansion, refroidie et éventuellement filtrée afin d'alimenter les conducteurs creux en cuivre ou en alliages de cuivre du stator d'alternateur, une partie de l'eau est dérivée en amont de l'alternateur vers un circuit de désionisation alimentant le réservoir d'expansion, ledit circuit de désionisation comprenant au moins une résine susceptible de retenir les ions $Cu^{2+}$ et au moins une résine susceptible de retenir tout ou partie des anions présents dans l'eau de refroidissement, le circuit de désionisation comprenant un circuit de déminéralisation et un circuit de traitement avec des moyens permettant l'ouverture sélective ou simultanée desdits circuits, ledit dispositif étant **caractérisé en ce qu'**il comprend au moins un moyen permettant la régulation du débit et/ou de la qualité de l'air à l'entrée du réservoir d'expansion.

**Patentansprüche**

1. Verfahren zur Behandlung und Konditionierung des Kühlwassers eines Stators eines Wechselstromgenerators, der mit Luftzufuhr arbeitet, wobei das Wasser des geschlossenen Kühlkreises des Stators des Wechselstromgenerators mittels einer Pumpe von einem Dehnungsbehälter her befördert wird, abgekühlt wird und möglicherweise gefiltert wird, um die hohlen Leitungen des Stators des Wechselstromgenerators, die aus Kupfer oder Kupferlegierungen bestehen, zu speisen, wobei ein Teil des Wassers stromaufwärts des Wechselstromgenerators in Richtung eines Deionisierungskreises abgezweigt wird, der den Dehnungsbehälter speist, wobei dieser Deionierungskreis zumindest ein Kunstharz aufweist, das $Cu^{2+}$ Ionen halten kann, und zumindest ein Kunstharz, das zumindest einen Teil der Anionen halten kann, die sich in dem Kühlwasser befinden, wobei der Deionisierungskreis einen Demineralisierungskreis und einen Kreis zur Behandlung mit Mitteln aufweist, die das selektive oder gleichzeitige Öffnen dieser Kreise und die Regelung der Durchflussleistung dieser Kreise ermöglichen,

**dadurch gekennzeichnet, dass**

der partielle Druck des $CO_2$ in der Gasphase dieses Dehnungsbehälters auf einem solchen Wert gehalten wird, dass gilt:

$$\log (pCO_2) > 1{,}8 \times \log (S_{\text{éch}}/Q_{\text{res}}) + 0{,}034 \times T - 8{,}1$$

, wobei $pCO_2$ den partiellen Druck des $CO_2$ in der Gasphase des Dehnungsbehälters darstellt,

$S_{\text{éch}}$ die Oberfläche des Austausches zwischen den Elementen aus Kupfer oder Kupferlegierungen, die den Kühlwasserkreis bilden,

$Q_{\text{res}}$ die Durchflussleistung des Wassers, das das Kunstharz durchquert, das das Halten der $Cu^{2+}$ Ionen sicherstellt,

und T die Temperatur des Kühlwassers am Ausgang des Stators;

wobei $pCO_2$ in atm ausgedrückt wird, $(S_{\text{éch}}/Q_{\text{res}})$ in $h \cdot m^{-1}$ und T in $°C$.

**2.** Verfahren nach Anspruch 1, **dadurch gekennzeichnet, dass** der Deionisierungskreis einen Demineralisierungskreis mit gemischter Schicht sowie eventuell einen Behandlungskreis mit gemischter Schicht aufweist, der abgezweigt von dem Mineralisierungskreis platziert ist mit Mitteln, die das selektive oder gleichzeitige Öffnen dieser Kreise ermöglichen.

**3.** Verfahren nach einem der vorangehenden Ansprüche 1 oder 2, **dadurch gekennzeichnet, dass** als Kunstharz, das zumindest einen Teil der Anionen und der $Cu^{2+}$ Ionen halten kann, ein Kunstharz mit gemischter Schicht aus starken Anionen, gesättigt mit $OH^-$, und aus starken Kationen, gesättigt mit $H^+$, verwendet wird, und dass die Zusammensetzung der Luft in der Gasphase des Dehnungsbehälters geregelt wird.

**4.** Verfahren nach einem der Ansprüche 1 und 2, **dadurch gekennzeichnet, dass** als Kunstharz, das zumindest einen Teil der Anionen und der $Cu^{2+}$ Ionen halten kann, eine gemischte Schicht aus Kunstharzen mit starken Kationen, gesättigt mit $H^+$, und aus schwachen Anionen verwendet, die kein $HCO_3^-$ halten können.

**5.** Verfahren nach Anspruch 1, **dadurch gekennzeichnet, dass** der Deionisierungskreis einen Demineralisierungskreis aus Kunstharz mit gemischter Schicht aus starken Anionen und starken Kationen sowie einen Behandlungskreis aus Kunstharz aus starken Kationen aufweist, der abgezweigt von dem Mineralisierungskreis platziert ist mit Mitteln, die das selektive oder gleichzeitige Öffnen dieser Kreise ermöglichen.

**6.** Verfahren nach Anspruch 1, **dadurch gekennzeichnet, dass** der Deionisierungskreis einen Demineralisierungskreis aus Kunstharz aus starken Anionen und einen Behandlungskreis aus Kunstharz aus starken Kationen aufweist, der abgezweigt von dem Mineralisierungskreis platziert ist mit Mitteln, die das selektive oder gleichzeitige Öffnen dieser Kreise ermöglichen.

**7.** Verfahren nach einem der Ansprüche 1 bis 6, **dadurch gekennzeichnet, dass** das Verhältnis $S_{\text{éch}}/Q_{\text{res}}$ geringer ist als $100 \ h \cdot m^{-1}$, vorzugsweise geringer als $80 \ h \cdot m^{-1}$ und noch besser $50 \ h \cdot m^{-1}$.

**8.** Verfahren nach einem der Ansprüche 1 bis 7, **dadurch gekennzeichnet, dass** der partielle Druck des $CO_2$ in der Gasphase des Dehnungsbehälters zwischen $10^{-5}$ und $10^{-1,5}$ atm gehalten wird, vorzugsweise bei ungefähr $10^{-3,48}$ atm.

**9.** Verfahren nach einem der Ansprüche 1 bis 8, **dadurch gekennzeichnet, dass** die Temperatur T zwischen 20 und $70°C$ gehalten wird.

**10.** Verfahren nach einem der Ansprüche 1 bis 9, **dadurch gekennzeichnet, dass** der partielle Druck des $CO_2$ in der Gasphase des Dehnungsbehälters durch ein Mittel aufrechterhalten wird, das die Regelung der Durchflussleistung und/oder der Komposition der Luft am Eingang des Dehnungsbehälters ermöglicht.

**11.** Verfahren nach einem der Ansprüche 1 bis 9, **dadurch gekennzeichnet, dass** der partielle Druck des $CO_2$ in der Gasphase des Dehnungsbehälters durch ein Mittel aufrechterhalten wird, das die Regelung des Anteils an $CO_2$ in der Luft ermöglicht, die den Dehnungsbehälter speist.

**12.** Verfahren nach einem der Ansprüche 1 bis 9, **dadurch gekennzeichnet, dass** der partielle Druck des $CO_2$ in der Gasphase des Dehnungsbehälters durch die Durchflussleistung und die Zusammensetzung der Luft am Eingang des Dehnungsbehälters eingestellt werden kann und/oder die Durchflussleistung des an dem anionischen Kunstharz oder dem Kunstharz mit der gemischten Schicht behandelten Wassers, wenn dieses gleichzeitig mit einem kationischen Kunstharz funktioniert, das abzweigend platziert ist.

**13.** Vorrichtung zum Ausführen des Verfahrens gemäß einem der Ansprüche 1 bis 12, in welchem das Wasser des geschlossenen Kühlkreislaufs des Stators des Wechselstromgenerators mittels einer Pumpe von einem Dehnungsbehälter her geleitet wird, abgekühlt wird und eventuell filtriert wird, um die hohlen des Stators des Wechselstromgenerators, die aus Kupfer oder aus Kupferlegierungen bestehen, zu speisen, wobei ein Bereich des Wassers stromaufwärts des Wechselstromgenerators in Richtung eines Deionisierungskreises abgezweigt wird, der den Dehnungsbehälter speist, wobei dieser Deionisierungskreis zumindest ein Kunstharz aufweist, das $CO^{2+}$-Ionen halten kann, und zumindest ein Kunstharz, das zumindest einen Teil der Anionen halten kann, die sich in dem Kühlwasser befinden, wobei der Deionisierungskreis einen Demineralisierungskreis und einen Behandlungskreis mit Mitteln aufweist, die die selektive oder gleichzeitige Öffnung dieser Kreise ermöglichen, wobei diese Vorrichtung **dadurch gekennzeichnet ist, dass** sie zumindest ein Mittel aufweist, das die Regelung der Durchflussleistung und/oder die Qualität der Luft am Eingang des Dehnungsbehälters ermöglicht.

**Claims**

**1.** Method of processing and conditioning coolant water of the stator of an alternator operating in an aerated mode, according to which the water of the closed coolant circuit of the stator of the alternator is driven by a pump from an expansion tank, cooled and possibly filtered in order to supply the hollow conductors made from copper or copper alloys of the alternator stator, wherein a proportion of the water is diverted upwards from the alternator towards a de-ionization circuit supplying the expansion tank, wherein said de-ionization circuit comprises at least a resin capable of retaining the $Cu^{2+}$ ions and at least a resin capable of retaining all or a proportion of the anions present in the coolant water, wherein the de-ionization circuit comprises a demineralization circuit and a processing circuit with means facilitating the selective or simultaneous opening of said circuits and the regulation of the flow in said circuits, wherein said method is **characterized by** the fact that the partial pressure in $CO_2$ in the gaseous phase of said expansion tank is maintained at a value such that:

$$\log(pCO_2) > 1.8 \times \log(S_{exchange} / Q_{resin}) + 0.034 \times T - 8.1$$

where $pCO_2$ represents the partial pressure of the $CO_2$ in the gaseous phase of said expansion tank,
$S_{exchange}$ is the exchange surface between the elements made from copper or copper alloys constituting the circuit and the coolant water,
$Q_{resin}$ is the flow of water crossing the resin ensuring the retention of the $Cu^{2+}$ ions,
and T is the temperature of the coolant water upon leaving the stator,
wherein $pCO_2$ is expressed in atm, $(S_{exchange} / Q_{resin})$ in $h.m^{-1}$ and T in ° Celsius.

**2.** Method according to Claim 1 **characterized by** the fact that the de-ionization circuit comprises a demineralization circuit with a mixed bed and possibly a processing circuit with a mixed bed, placed in diversion of the demineralization circuit with means enabling the selective or simultaneous opening of said circuits.

**3.** Method according to any one of the Claims 1 or 2 **characterized by** the fact that, as a resin capable of retaining all or a proportion of the anions and the $Cu^{2+}$ ions, one uses an $OH^-$ saturated, strong anion and $H^+$ saturated, strong cation mixed bed resin, and by the fact that one regulates the composition of the air in the gaseous phase of the expansion tank.

**4.** Method according to any one of the Claims 1 to 2 **characterized by** the fact that one uses, as a resin capable of retaining all or a proportion of the anions and the $Cu^{2+}$ ions, a $H^+$ saturated, strong cation, weak anion mixed bed resin likely to not retain $HCO_3^-$.

**5.** Method according to Claim 1 **characterized by** the fact that the de-ionization circuit comprises a demineralization circuit with resin with a strong anion, strong cation mixed bed resin, and a processing circuit with strong cation resin, placed in diversion of the demineralization circuit with means facilitating the selective or simultaneous opening of said circuits.

6. Method according to Claim 1 **characterized by** the fact that the de-ionization circuit comprises a demineralization circuit with strong anion resin and a processing circuit with strong cations resin, placed in diversion of the demineralization circuit with means facilitating the selective or simultaneous opening of said circuits.

7. Method according to any one of the Claims 1 to 6 **characterized by** the fact that the relationship $S_{exchange}$ / $Q_{resin}$ is lower than 100 h.m$^{-1}$, preferably is lower than 80 h.m$^{-1}$ and even more preferably is 50 h.m$^{-1}$.

8. Method according to any one of the Claims 1 to 7 **characterized by** the fact that the partial pressure in $CO_2$ in the gaseous phase of the expansion tank is maintained between 10$^{-5}$ and 10$^{-1.5}$ atm, preferably at around 10$^{-3.48}$ atm.

9. Method according to any one of the Claims 1 to 8 **characterized by** the fact that the temperature T is maintained between 20 and 70°C.

10. Method according to any one of the Claims 1 to 9 **characterized by** the fact that the partial pressure in $CO_2$ in the gaseous phase of the expansion tank is maintained by a means facilitating the regulation of the flow and / or of the composition of the air at the entrance of the expansion tank.

11. Method according to any one of the Claims 1 to 9 **characterized by** the fact that the partial pressure in $CO_2$ in the gaseous phase of the expansion tank is maintained by a means facilitating the regulation of the $CO_2$ content in the air which supplies the expansion tank.

12. Method according to one of the Claims 1 to 9 **characterized by** the fact that the partial pressure in $CO_2$ in the gaseous phase of the expansion tank can be adjusted by the flow and the composition of the air at the entrance of the expansion tank and / or the flow of processed water on the anionic resin or the mixed bed resin when this operates simultaneously with a cationic resin placed in diversion.

13. Device for the implementation of the method of any one of the Claims 1 to 12, in which the water of the closed coolant circuit of the stator of an alternator is driven by a pump from an expansion tank, cooled and possibly filtered in order to supply the hollow conductors made from copper or copper alloys of the alternator stator, wherein a proportion of the water is diverted upwards from the alternator towards a de-ionization circuit supplying the expansion tank, wherein said de-ionization circuit comprises at least a resin capable of retaining the $Cu^{2+}$ ions and at least a resin capable of retaining all or a proportion of the anions present in the coolant water, wherein the de-ionization circuit comprises a demineralization circuit and a processing circuit with means facilitating the selective or simultaneous opening of said circuits, wherein said device is **characterized in that** it comprises at least a means facilitating the regulation of the flow and / or of the quality of the air at the entrance of the expansion tank.

# FIG.1